# EUROPÄISCHE PATENTSCHRIFT

(11) **EP 0 889 808 B1**
(45) Veröffentlichungstag und Bekanntmachung des Hinweises auf die Patenterteilung: **25.04.2001**
(21) Anmeldenummer: 97904395.7
(22) Anmeldetag: 10.02.1997
(51) Int. Cl.: B60R 21/22

(54) **AUFBLASBARES KOPFSCHUTZSYSTEM FÜR DEN SEITENBEREICH EINES PERSONENKRAFTWAGENS**
INFLATABLE HEAD-PROTECTION SYSTEM FOR THE SIDE REGION OF A PASSENGER CAR
SYSTEME GONFLABLE DE PROTECTION DE LA TETE PREVU POUR LA ZONE LATERALE D'UNE VOITURE PARTICULIERE

(30) Priorität: 27.03.1996 DE 19612228
(43) Veröffentlichungstag der Anmeldung: 13.01.1999
(73) Patentinhaber: Bayerische Motoren Werke Aktiengesellschaft, 80788 München (DE)
(72) Erfinder: STAVERMANN, Joerg, D-80331 München (DE)
(86) Internationale Anmeldenummer: EP9700574
(87) Internationale Veröffentlichungsnummer: WO9735748

(56) Entgegenhaltungen:
- WO-A-94/19215
- DE-A- 4 307 175
- GB-A- 2 278 812

## Beschreibung

Die Erfindung betrifft ein aufblasbares Kopfschutzsystem für den Seitenbereich eines Personenkraftwagens mit Vordersitzen und Rücksitzen, bestehend aus einem über mindestens zwei Befestigungspunkte an der Fahrzeug-Karosse angebundenen und im nicht aufgeblasenen Zustand zumindest längs einer Verbindungslinie dieser beiden Befestigungspunkte gefalteten, längs eines Karossen-Rahmenteiles angeordneten Luftsack. Zum bekannten Stand der Technik wird lediglich beispielshalber auf die gattungsbildende WO 94/19215 oder auf die DE 42 31 522 A1 verwiesen.

Stand der Technik sind Kopfschutzsysteme, die entweder mit einem Thorax-Airbag-Modul oder -Luftsack verbunden sind und die sich aus der Fahrzeug-Türe oder dem Fahrzeug-Sitz entfalten, und bei denen die Luftsackgröße so ausgelegt ist, dass sowohl der Thorax-Bereich, als auch der Kopf geschützt werden kann, oder aber separate Kopfschutzsysteme, die beispielsweise im Dachbereich des Fahrzeuges angeordnet sind. Bei separaten Kopfschutzsystemen kann man unterscheiden zwischen Luftsäcken, die als kompakte Einheit insassennah am Dach befestigt werden und Luftsäcken, die an der A-Säule und der C-Säule der Fahrzeug-Karosse befestigt werden und sich durch Kontraktion während des Aufblasvorganges in die Schutzposition bringen (vgl. WO 94/19215).

Weder Kopfschutzsysteme, die mit dem Thorax-Airbag-Modul verbunden sind, noch separate, im Fahrzeug-Dach angeordnete Systeme sind in der Lage, Querkräfte, die durch den seitlich auf sie auftreffenden Kopf einwirken, aufzunehmen. Ein starkes Pendeln des Kopfes während einer Seitenkollision insbesondere mit niedrigen Kollisionsgegnern, die keine Abstützfläche für den aufgeblasenen Luftsack bieten, können diese bekannten Systeme somit nicht verhindern. Das in der bereits mehrfach zitierten WO 94/19215 gezeigte System ist zwar geeignet, Querkräfte aufzunehmen, erfordert aber durch seine spezielle Wirkungsweise komplizierte Herstellprozesse und ist nur als schlauchförmiges Gebilde mit rundem Querschnitt herstellbar sowie nur in einer definierten Lage im Fahrzeug anzuordnen. Ferner ist dieses System nur für die auf den Vordersitzen sitzenden Frontinsassen des Personenkraftwagens ausgelegt.

Aufgabe der Erfindung ist es daher, eine Luftsack-Konfiguration aufzuzeigen, die die Vorteile der bekannten Systeme nutzt und gleichzeitig größere gestalterische Freiheiten hinsichtlich der Auslegung des Schutzbereiches sowie der Unterbringung des Luftsackes eröffnet.
Zur Lösung dieser Aufgabe ist gemäß den kennzeichnenden Merkmalen des Anspruchs 1 vorgesehen, dass der sich von den Vordersitzen bis zu den Rücksitzen erstreckende Luftsack zusätzlich am Rahmenteil befestigt ist, dass die beiden Befestigungspunkte an der A-Säule und an der C-Säule der Karosse liegen, und dass zumindest zwei von der Verbindungslinie geschnittene Aussparungen im Luftsack vorgesehen sind. Vorteilhafte Aus- und Weiterbildungen sind Inhalt der Unteransprüche.

Erfindungsgemäß erstreckt sich der Luftsack über einen relativ großen Seitenbereich des Innenraumes des Personenkraftwagens, d. h. der Luftsack schützt im aufgeblasenen Zustand sowohl die Fahrzeuginsassen auf den Vordersitzen, als auch diejenigen auf den Rücksitzen. Um dabei einen optimalen Schutz des Kopfes nicht nur bei einer Seitenkollision des Personenkraftwagens, sondern auch bei einem Überschlag desselben zu gewährleisten, ist dieser Luftsack flächig - und nicht lediglich schlauchförmig - ausgebildet, wobei zumindest Teilbereiche des Thorax ebenfalls abgefangen und somit geschützt werden können. Gleichzeitig weist das erfindungsgemäße Kopfschutzsystem eine relativ hohe Quersteifigkeit auf, da der Luftsack nicht nur am Rahmenteil der Fahrzeug-Karosse - üblicherweise handelt es sich dabei um den Dachholm bzw. den Dachbereich des Seitenrahmens - befestigt ist, sondern zusätzliche Befestigungspunkte sowohl an der A-Säule als auch an der C-Säule der Karosse aufweist. Bei einem seitlichen Aufprall des Kopfes kann der Luftsack somit nicht seitlich ausweichen, so dass der Kopf des Fahrzeuginsassen sicher abgefangen wird. Die Befestigungspunkte an der A-Säule und der C-Säule können dabei möglichst weit vom Rahmenteil entfernt sein, d. h. wenn der Luftsack am Dachholm als Rahmenteil befestigt ist, so sollten diese Befestigungspunkte an der A-Säule sowie an der C-Säule möglichst weit unten liegen. Da nun aber die einzelnen Befestigungspunkte des Luftsackes relativ weit voneinander beabstandet liegen, um diesen Luftsack zur optimalen Querkraftaufnahme quasi über dem gesamten oberen Seitenbereich des Fahrzeug-Innenraumes verspannen zu können, kann es Probleme mit der Unterbringung des Luftsackes im nicht aufgeblasenen Zustand längs des Karossen-Rahmen-Teiles, nämlich des Dachholmes oder der Türbrüstung, geben. Um sicherzustellen, dass der Luftsack trotz dieser weit auseinanderliegenden Befestigungspunkte noch gefaltet werden kann, ist vorgesehen, dass die Faltung zumindest längs einer Verbindungslinie der beiden Befestigungspunkte an der A-Säule und der C-Säule erfolgt, und dass zumindest zwei von der Verbindungslinie geschnittene Aussparungen im Luftsack vorgesehen sind. Nach erstmaliger Faltung um die genannte Verbindungslinie liegen aufgrund der Aussparungen praktisch drei Luftsacksegmente vor, die jeweils für sich weitergefaltet und dann auch auf einfache Weise am Karossen-Rahmenteil untergebracht werden können.

Dies sowie weitere Merkmale und Vorteile der Erfindung gehen auch aus der folgenden Beschreibung eines bevorzugten Ausführungsbeispieles hervor. Dabei zeigt
- Fig. 1: die Ansicht des Seitenbereiches eines Personenkraftwagen-Innenraumes mit einem erfindungsgemäßen aufgeblasenen Kopfschutzsystem, sowie die
- Fig. 2, 3: quasi einen Schnitt durch Fig. 1, d. h. eine Teil-Längsansicht des PKW-Innenraumes.

Mit der Bezugsziffer 1 ist ein Luftsack bezeichnet, der stets im aufgeblasenen Zustand dargestellt ist und dabei als Kopfschutzsystem für den Seitenbereich eines Personenkraftwagens dient. Dieser Luftsack 1 schützt dabei sowohl den Kopf von Fahrzeuginsassen, die sich auf den Vordersitzen 2 des Personenkraftwagens befinden, als auch den Kopf eines Fahrzeuginsassen, der auf dem Rücksitz 3 sitzt. Mögliche Kopfpositionen eines Fahrzeuginsassen auf den Vordersitzen 2 sind mit der Bezugsziffer 4 dargestellt.

Der Personenkraftwagen weist wie üblich eine A-Säule 5, eine B-Säule 6, sowie eine C-Säule 7 und ferner einen Dachholm 8 auf, der im folgenden auch als Karossen-Rahmenteil 8 bezeichnet wird. An diesem Dachholm 8 ist der Luftsack 1 an diversen Befestigungspunkten 9b befestigt und im nicht aufgeblasenen Zustand auch längs dieses Dachholmes 8 gefaltet angeordnet.

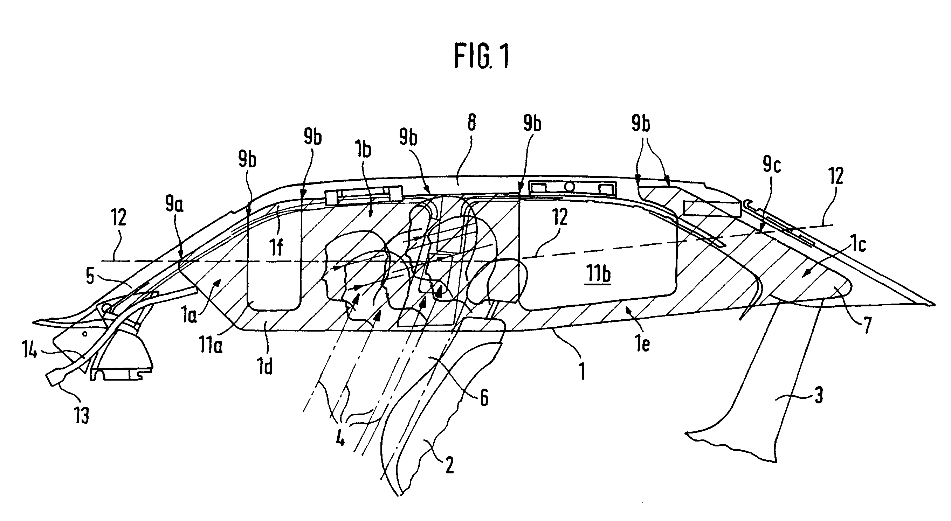

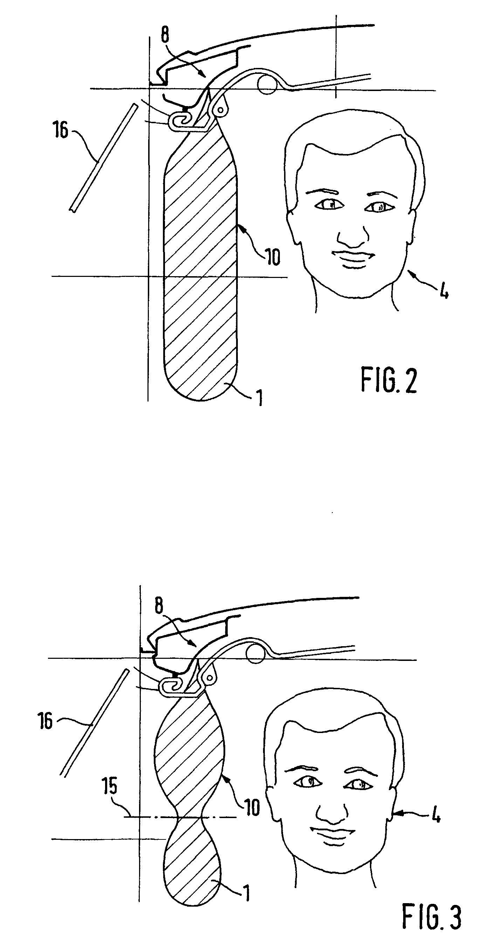

Ferner ist der Luftsack 1 an einem Befestigungspunkt 9a an der A-Säule 5 und an einem Befestigungspunkt 9c an der C-Säule 7 befestigt, um im aufgeblasenen Zustand sicherzustellen, dass dieser Luftsack 1 Querkräfte, die aus einem Aufprall des Kopfes 4 resultieren und somit bei Fig. 1 im wesentlichen senkrecht zur Zeichenebene und bei den Fig. 2, 3 gemäß Pfeilrichtung 10 in Richtung auf die PKW-Seitenscheibe 16 wirken, aufnehmen kann. Der Luftsack 1 ist somit im aufgeblasenen Zustand im wesentlichen vollflächig verspannt. Ohne Zusatzmaßnahmen wäre es dann jedoch nicht möglich, den Luftsack 1 zu falten und im nicht aufgeblasenen Zustand im wesentlichen längs des Rahmenteiles bzw. Dachholmes 8 unterzubringen. Daher sind im Luftsack 1 zwei Aussparungen 11 vorgesehen, die von einer gedachten Verbindungslinie 12 geschnitten werden. Diese gedachte Verbindungslinie 12 verbindet die beiden Befestigungspunkte 9a, 9c im wesentlichen geradlinig. Es ist klar ersichtlich, dass der Luftsack 1 ausgehend vom dargestellten Zustand als erstes um diese Verbindungslinie 12 gefaltet werden kann, d. h. der unterhalb dieser Verbindungslinie 12 liegende Bereich des Luftsackes 1 kann nach oben zum Dachholm 8 hin geklappt werden. Aufgrund der beiden Aussparungen 11 ist es anschließend daran möglich, den bezüglich des Personenkraftwagens vor der linken Aussparung 11a liegenden Teilbereich 1a des Luftsackes 1 weiter zum oberen Abschnitt der A-Säule 5 hin zu falten, während der bezüglich des Personenkraftwagens hinter der hinteren Aussparung 11b liegende Teilbereich 1c des Luftsackes im wesentlichen zum oberen Abschnitt der C-Säule 7 hin weiter zusammengefaltet werden kann. Der zwischen den beiden Aussparungen 11a, 11b liegende Teilbereich 1b des Luftsackes 1 kann dann in Richtung zum Dachholm 8 hin weiter zusammengefaltet werden. Mit der beschriebenen Faltstrategie sowie mit Hilfe der Aussparungen 11a, 11b ist es somit möglich, einen im aufgeblasenen Zustand optimal verspannten, sich von den Vordersitzen 2 bis zu den Rücksitzen 3 erstreckenden Luftsack 1 gefaltet im wesentlichen im Bereich des Dachholmes 8 sowie in den oberen Endabschnitten der A-Säule 5 sowie der C-Säule 7, die in diesem Sinne ebenfalls Karossen-Rahmenteile 8 bilden, unterzubringen.

Die Aussparungen 11a, 11b erstrecken sich mit ihrer dem Rahmenteil 8 abgewandten Seite nicht bis zum Rand des Luftsackes 1, was bedeutet, dass im unteren Luftsackbereich zwischen den Teilbereichen 1a und 1b ein ebenfalls aufblasbarer Verbindungssteg 1d und zwischen den Teilbereichen 1b und 1c ebenfalls untenliegend ein aufblasbarer Verbindungssteg 1e vorgesehen ist. In gleicher Weise erstreckt sich die Aussparung 11a mit ihrer dem Rahmenteil 8 zugewandten Seite ebenfalls nicht bis zum Rand des Luftsackes 1, so dass sich hier abermals ein aufblasbarer Verbindungssteg 1f befindet. Die hintere Aussparung 11b erstreckt sich beim hier gezeigten Ausführungsbeispiel obenseitig bis zum Rand des Luftsackes 1, jedoch ist alternativ hierzu auch eine Ausführung möglich, bei der im Bereich des Dachholmes 8 ebenfalls ein Verbindungssteg zwischen den Teilbereichen 1b und 1c vorgesehen ist.

Eine Funktion dieser Verbindungsstege 1d bis 1f ist neben der Tatsache, dass diese Verbindungsstege dem aufgeblasenen Luftsack 1 eine erhöhte Quersteifigkeit verleihen, darin zu sehen, dass das Aufblasen der einzelnen Luftsack-Teilbereiche 1a bis 1c auch mit Hilfe eines einzigen Gasgenerators 13 erfolgen kann. Dieser Gasgenerator 13, der mit dem Luftsack 1 über eine Luftleitung 14 verbunden ist, kann beispielsweise im unteren Bereich der A-Säule 5 - bevorzugt unterhalb der Instrumententafel - angeordnet sein, daneben jedoch auch im oberen Bereich der B-Säule 6 und/oder der C-Säule 7, wobei selbstverständlich auch mehrere Gasgeneratoren 13 vorgesehen sein können.

Wie bereits erläutert, erhält das beschriebene Kopfschutzsystem durch die spezielle Geometrie der Luftsackbereiche 1a, 1b, 1c sowie aufgrund der beiden Bindungsstege 1d und 1e in Verbindung mit den unteren Befestigungspunkte 9a und 9c und der hauptsächlichen Anbindung am Dachholm 8 in den Befestigungspunkten 9b eine gewisse Quersteifigkeit. Diese Quersteifigkeit kann in Abhängigkeit vom Luftsack-Innendruck noch variiert werden und ist besonders vorteilhaft, um bei niedrigen Kollisionsgegnern im Seitenbereich des Personenkraftwagens eine starke Querbeschleunigung und damit eine große Pendelbewegung des Kopfes 4 zu vermeiden. Dabei soll dieses Kopfschutzsystem nicht nur eine Rückhaltung, sondern einen längerdauernden Schutz des Kopfes bewirken. Insbesondere soll hiermit auch ein Schutz bei einem Fahrzeug-Überschlag geboten werden. Aus diesem Grunde ist vorgesehen, dass der Luftsack 1 im wesentlichen luftdicht ausgebildet ist. Dies bedeutet, dass keine künstlichen Luftabströmöffnungen vorgesehen sind, wie dies bei Lenkrad-Airbags üblich ist. Weiterhin sollte auch das Gewebe des Luftsackes im wesentlichen luftundurchlässig sein und nicht luftdurchlässig, wie dies beispielsweise bei Thorax-Airbags üblich ist. Das beschriebene Kopfschutzsystem kann somit mit relativ hohen Innendrücken über einen Zeitraum von mehreren Sekunden arbeiten, wenn der Luftsack 1 aus beschichtetem bzw. inprägniertem Gewebe mit versiegelten oder verklebten Nähten gefertigt ist oder wenn das zunächst unbeschichtete Gewebe nach der Fertigstellung des Luftsackes beschichtet oder imprägniert wird.

Durch die beschriebene Auslegung des Luftsackes 1 ergibt sich ein großer, individuell auswählbarer bzw. einstellbarer Schutzbereich für den Kopf 4 sowohl eines auf den Vordersitzen 2 als auch eines auf den Rücksitzen 3 sitzenden Fahrzeuginsassen. Dabei sind auch unterschiedliche Querschnitte im Luftsack 1 realisierbar, wie dies aus einem Vergleich der Fig. 2, 3 ersichtlich wird. Hierzu weist der Luftsack 1 geeignet angebrachte Abnäher 15 auf. Jedoch kann dies sowie weitere Details durchaus abweichend vom gezeigten Ausführungsbeispiel gestaltet sein, ohne den Inhalt der Patentansprüche zu verlassen. Stets erhält man ein aufblasbares Kopfschutzsystem mit einem sehr großen Schutzbereich, das optimalerweise Querkräfte aufnehmen kann und das darüber hinaus einen erhöhten Schutz vor Glassplittern der unter Umständen geborstenen Seitenscheiben 16 bietet. Die im Hinblick auf die Querkraftaufnahme benötigten unteren Befestigungspunkte 9a, 9c des Kopfschutzsystemes werden dabei definiert durch die zur Unterbringung des Luftsackes 1 notwendigen Hauptfaltachsen sowie durch die Fahrzeug- und Luftsackgeometrie, während die oberen Befestigungspunkte 9b in Lage und Anzahl durch die notwendige Systemfestigkeit bestimmt werden.

## Patentansprüche

1. Aufblasbares Kopfschutzsystem für den Seitenbereich eines Personenkraftwagens mit Vordersitzen (2) und Rücksitzen (3), bestehend aus einem über mindestens zwei Befestigungspunkte (9a, 9c) an der Fahrzeug-Karosse angebundenen und im nicht aufgeblasenen Zustand zumindest längs einer Verbindungslinie (12) dieser beiden Befestigungspunkte (9a, 9c) gefalteten, längs eines Karossen-Rahmenteiles (8) angeordneten Luftsack (1), dadurch gekennzeichnet, daß der sich von den Vordersitzen (2) bis zu den Rücksitzen (3) erstreckende Luftsack (1) zusätzlich am Rahmenteil (8) befestigt ist, daß die beiden Befestigungspunkte (9a, 9c) an der A-Säule (5) und an der C-Säule (7) der Karosse liegen und daß zumindest zwei von der Verbindungslinie (12) geschnittene Aussparungen (11a, 11b) im Luftsack vorgesehen sind.

2. Kopfschutzsystem nach Anspruch 1,
dadurch gekennzeichnet, daß sich die Aussparungen (11a, 11b) mit ihrer dem Rahmenteil (8) abgewandten Seite nicht bis zum Rand des Luftsackes (1) erstrecken.

3. Kopfschutzsystem nach Anspruch 1 oder 2,
dadurch gekennzeichnet, daß sich zumindest die näher an einem Gasgenerator (13) zur Befüllung des Luftsackes (1) liegende Aussparung (11a) mit ihrer dem Rahmenteil (8) zugewandten Seite nicht bis zum Rand des Luftsackes (1) erstreckt.

4. Kopfschutzsystem nach einem der vorangegangenen Ansprüche,
dadurch gekennzeichnet, daß der Luftsack (1) im wesentlichen luftdicht ausgebildet ist.

5. Kopfschutzsystem nach einem der vorangegangenen Ansprüche,
dadurch gekennzeichnet, daß der Luftsack (1) durch Vorsehen von Abnähern (15) unterschiedliche Querschnitte aufweist.

## Claims

1. An inflatable head protection system for the side region of a passenger car with front seats (2) and back seats (3), the system comprising an airbag (1) attached to the vehicle body via at least two fastening places (9a, 9c) and, when not inflated, being folded along at least one line (12) joining the two fastening places (9a, 9c) and placed along a part (8) of the body frame, characterised in that the airbag (1), which extends from the front seats (2) to the back seats (3), is additionally fastened to the frame part (8), the two fastening places (9a, 9c) are on the A-column (5) and on the C-column (7) on the body, and at least two recesses (11a, 11b) intersected by the connecting line (12) are provided in the airbag.

2. A head protection system according to claim 1,
characterised in that the sides of the recesses (11a, 11b) remote from the frame part (8) do not extend as far as the edge of the airbag (1).

3. A head protection system according to claim 1 or claim 2,
characterised in that the side nearer the frame part (8) of at least that recess (11a) situated near a gas generator (13) for filling the airbag (1) does not extend as far as the edge of the airbag (1).

4. A head protection system according to any of the preceding claims,
characterised in that the airbag (1) is made substantially airtight.

5. A head protection system according to any of the preceding claims,
characterised in that the airbag (1) has varying cross-sections, made by providing darts or tucks (15).

## Revendications

1. Système de protection gonflable pour la zone latérale d'un véhicule automobile particulier avec des sièges avant (2) et des sièges arrière (3), se composant d'un sac d'air (1), relié au moyen d'au moins deux points de fixation (9a, 9c) à la carrosserie du véhicule, sac d'air plié quand il n'est pas gonflé au moins le long d'une ligne de liaison (12) de ces deux points de fixation (9a, 9c), et disposé le long d'une partie (8) du châssis de la carrosserie,
caractérisé en ce que
le sac d'air (1) qui s'étend depuis les sièges avant (2) jusqu'aux sièges arrière (3) est fixé en plus sur la partie (8) du châssis, les deux points de fixation (9a, 9c) se trouvent sur la colonne A (5) et sur la colonne C (7) de la carrosserie, et au moins deux évidements (11a, 11b) coupés par la ligne de liaison (12) sont prévus dans le sac d'air.

2. Système de protection de la tête selon la revendication 1,
caractérisé en ce que
les évidements (11a, 11b) ne s'étendent pas par leur côté situé à l'opposé de la partie (8) du châssis jusqu'au bord du sac d'air (1).

3. Système de protection de la tête selon la revendication 1 ou 2,
caractérisé en ce qu'
au moins l'évidement (11a) qui se trouve plus près d'un générateur de gaz (13) servant à remplir le sac d'air (1) ne s'étend pas par son côté tourné vers la partie (8) du châssis jusqu'au bord du sac d'air (1).

4. Système de protection de la tête selon lune quelconque des revendications précédentes,
caractérisé en ce que
le sac d'air (1) est essentiellement étanche à l'air.

5. Système de protection de la tête selon lune des revendications précédentes,
caractérisé en ce que
le sac d'air (1) présente des sections transversales différentes en prévoyant des pinces (15).
